# EUROPÄISCHE PATENTSCHRIFT

(11) **EP 1 865 146 B1**
(45) Veröffentlichungstag und Bekanntmachung des Hinweises auf die Patenterteilung: **08.04.2015**
(21) Anmeldenummer: 07405155.8
(22) Anmeldetag: 01.06.2007
(51) Int. Cl.: E21B 33/127

(54) **Packer zum ständigen Dichten und Verschliessen von unterschiedlichen Grundwasserstockwerken sowie artesischem Zulauf in ein Bohrloch**
Packer for continuous sealing and closing of different ground water levels and artesian inflow in a borehole
Empaqueteur destiné à l'étanchéification et à la fermeture constantes de divers étages d'eau souterraine tout comme affluence artésienne dans un trou percé au foret

(30) Priorität: 07.06.2006 CH 9202006
(43) Veröffentlichungstag der Anmeldung: 12.12.2007
(73) Patentinhaber: Berli, Stefan, 9053 Teufen (CH); Pingel, Reinhard, 9533 Kirchberg (CH)
(72) Erfinder: Berli, Stefan, 9053 Teufen (CH); Pingel, Reinhard, 9533 Kirchberg (CH)
(74) Vertreter: Gachnang, Hans Rudolf

(56) Entgegenhaltungen:
- EP-A- 0 651 130
- WO-A-01/80650
- US-A- 2 922 478
- US-A- 3 289 761
- US-A1- 2006 027 378

## Beschreibung

Gegenstand der Erfindung ist ein Packer zum ständigen Dichten und Verschliessen von unterschiedlichen Grundwasserstockwerken sowie artesischem Zulauf in einem Bohrloch gemäss Oberbegriff des Patentanspruchs 1.

Bei der Erstellung von Bohrlöchern im Bergbau, Tunnelbau und Spezialtiefbau sowie bei Erdwärmesonden-Bohrungen durchqueren Bohrungen oft wasserführende Schichten. An diesen Stellen dringt folglich Wasser in die Bohrung ein und kann entweder nach oben austreten oder sich mit Wasser anderer darüber- oder darunterliegender Schichten vermischen. Beides ist unerwünscht.

Zur temporären Abdichtung (im Zuge von hydraulischen Messungen), d.h. einer Abdichtung der Grundwasserstockwerke, ist es bekannt, sogenannte Packer einzubringen. Packer bestehen meist aus einem Packerrohr, über das ein elastischer Gummischlauch geschoben wird. Derartige Packer sind in der US2006/0027378 A1 oder der EP 0651 130 A2 gezeigt. Je nach Ausführung des Packers kann dessen radiale Dehnung durch axiales Zusammenpressen des Schlauchs bewirkt werden oder es wird ins Innere des Schlauchs am Packer Luft, Wasser, Öl oder ein anderes Medium eingepresst. Nach Beendigung von Messungen, Entnahmen oder dergleichen, für welche das Bohrloch erstellt worden ist, wird der Packer nach Zurückführen in die ursprüngliche schlanke Form dem Bohrloch mit den Messelementen wieder entnommen und letzteres verfüllt.
Solche bekannte Packer eignen sich zum temporären Abdichten wasserführender Schichten in Bohrlöchern, welche ein oder mehrere Rohre für die Durchführung von Messungen und dergleichen aufnehmen.
Es sind auch Packer bekannt, in welchen der Packerschlauch aus einem zumindest für eine Flüssigkeit durchlässigen Material besteht. Derartige Packer sind in der US 2 922 478, der US 3 289 761 und der WO01/80650 A2 gezeigt.

Eine Aufgabe der vorliegenden Erfindung ist die Schaffung eines Packers zum ständigen Abdichten von gas- und/oder wasserführenden Schichten in Bohrlöchern mit Erdwärmesonden-Bündeln.

Gelöst wird diese Aufgabe durch einen Packer mit den Merkmalen des Patentanspruchs 1. Vorteilhafte Ausgestaltungen des Packers werden in den abhängigen Ansprüchen umschrieben.

Erfindungsgemäss kann die Abdichtung von gas- oder wasserführenden Schichten und Stockwerken optimal erreicht werden, da durch die Porosität des Packerschlauchs z.B. Zementbrühe in den Raum zwischen den Packerschlauch und der Bohrlochwandung austreten und damit auch kleinste Unebenheiten in der Wandung, die durch einen elastischen Schlauch nicht gefüllt werden können, somit absolut dicht ausfüllen. Es können ober- und unterhalb von gas- oder wasserführenden Schichten Packerschläuche mit kurzer axialer Länge eingesetzt werden oder es kann ein Packerschlauch beliebiger Länge eingebracht werden, um beispielsweise die Bohrlochwandung über die gesamte Bohrlochtiefe abzudichten. Die mit Einschnitten versehenen Bohrungen in den Scheiben ermöglichen es, letztere an beliebiger Stelle in die Rohrbündel einzufügen.
Um das Aufbringen des Packerschlauchs auf das Sondenbündel zu vereinfachen, kann der Packerschlauch erfindungsgemäss auch aus einem rechteckförmigen Tuch bestehen, welches durch Verbindungsmittel wie Klettverschlüsse oder einen Reissverschluss, welcher an zwei Kanten des Tuchs angebracht ist, zu einem rohrförmigen Schlauch geformt werden. Auf diese Weise lässt sich der Packerschlauch nachträglich auch an sehr langen, bereits teilweise im Bohrloch versenkten Rohrbündeln mühelos anbringen. Um die Lagerhaltung der mit Bohrungen versehenen Scheiben gering zu halten, können letztere mit mindestens einer der maximalen Anzahl von Sondenrohren entsprechenden Anzahl von Bohrungen versehen sein, deren Durchmesser den dicksten verwendeten Sondenrohren entsprechen. Nicht benutzte Bohrungen können durch Blindzapfen verschlossen werden. Die zu grossen Bohrungen werden durch rohrförmige Adapterhülsen auf das richtige Mass gebracht, indem um die Sondenrohre im Bereich der Scheiben die längs aufgeschnittenen Adapterhülsen aufgesetzt werden.

Anhand eines illustrierten Ausführungsbeispiels wird die Erfindung näher erläutert. Es zeigen
- Figur 1: einen Vertikalschnitt durch einen herkömmlichen, auf einer Einbauleitung angeordneten Packer zum Abdichten einer Bohrung für hydraulische Messungen,
- Figur 2: einen Vertikalschnitt durch einen Doppelpacker zur Isolierung einer wasserleitenden Schicht im Bohrloch,
- Figur 3: einen Vertikalschnitt durch ein Bohrloch mit einem erfindungsgemässen Packer für ein Erdwärmesonden-Bündel,
- Figur 4: einen Horizontalschnitt durch eine Packerscheibe.

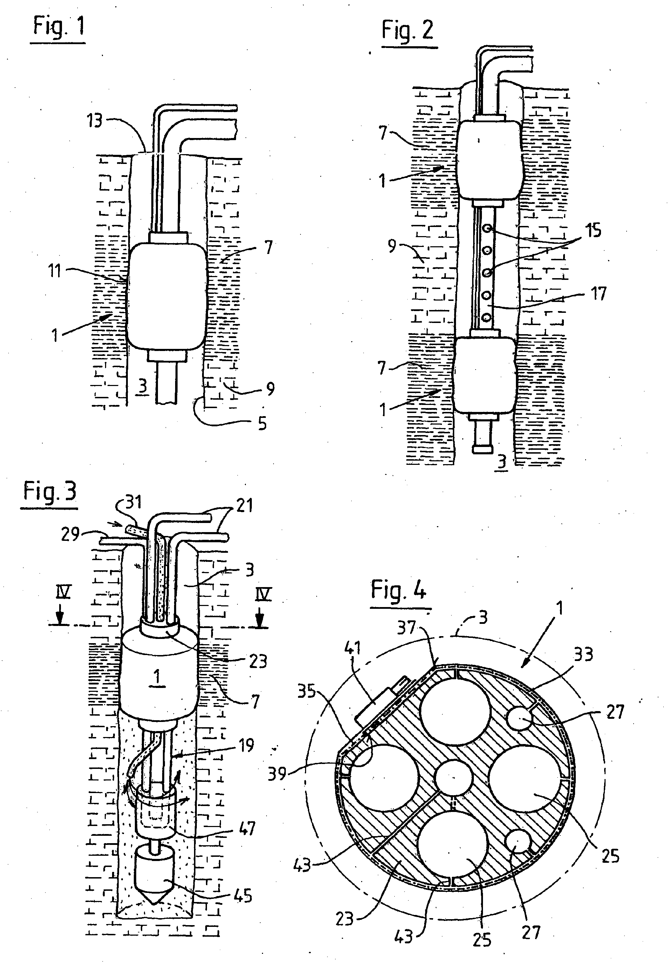

Figur 1 zeigt einen herkömmlichen Packer 1 zum Abdichten eines Bohrlochs 3. In der Wandung 5 des Bohrlochs 3 ist mit Bezugszeichen 7 dichtes, d.h. nicht wasserführendes Erdreich und mit Bezugszeichen 9, poröses, den Wasserzutritt zum Bohrloch ermöglichendes Gestein, z.B. in Gestalt eines Grundwasserstockwerks, dargestellt. Mit dem Packer 1 bzw. mit einem auf dem Packer 1 aufgesetzten dehnbaren Schlauch 11 wird der wasserführende Bereich, d.h. das Grundwasserstockwerk 9, bezüglich der Bohrlochoberfläche 13 temporär abgedichtet.

In Figur 2 wird ein Grundwasserstockwerk 9 zwischen zwei nicht wasserführenden Schichten 7 mit Packern 1 oben und unten abgedichtet. Durch ein mit Löchern 15 versehenes Rohr 17, welch letzteres durch die Packer 1 hindurch mit der Oberfläche verbunden ist, können Wasserproben aus dem wasserführenden Bereich 9 entnommen werden.
Bei beiden bekannten Anordnungen von Packern 1 in Bohrlöchern 3, werden letztere nach Beendigung der Arbeiten/Messungen, zu deren Zweck die Bohrung 3 erfolgt ist, aus dem Bohrloch 3 entnommen und letzteres bekannterweise wieder aufgefüllt.

Beim Verlegen von Erdwärmesonden 19, meist in Gestalt von haarnadelartig geformten Rohren 21, müssen wasserführende Schichten 9 insbesondere (aber nicht ausschliesslich) dann abgedichtet werden, wenn mehr als eine solche Schicht das Bohrloch 3 durchquert.

Der besseren Übersichtlichkeit halber ist in Figur 3, welche ein erfindungsgemässes Bohrloch 3 mit einem Packer 1 darstellt, eine Erdwärmesonde 19 mit nur einem haarnadelförmigen Rohr 21 wiedergegeben. Üblicherweise werden zwei haarnadelförmige Rohrpaare 21 in ein Bohrloch 3 abgesenkt.
Auf dem haarnadelförmigen Rohr 21, das eine Länge von beispielsweise 120, 150 m oder mehr aufweisen kann, ist an der zuvor während des Bohrens des Bohrlochs 3 gemessenen Tiefe ein Packer 1 aufgesetzt. Der erfindungsgemässe Packer 1 umfasst zwei gelochte Scheiben 23 (vgl. auch Figur 4), in welchen eine der Anzahl der Rohre 21 entsprechende Zahl von Löchern 25 angebracht ist. Im dargestellten Beispiel sind in der Scheibe 23 vier Löcher 25 eingelassen, welche zwei Rohrpaare aufnehmen können. Nebst den Löchern 25 für die Sondenrohre 21 sind weitere Löcher 27 ausgebildet, welche das Hindurchführen von Verpressleitungen 29 und Füllleitungen 31 ermöglichen.

Auf der Peripherie 33 der Scheiben 23 ist ein Packerschlauch 35, der vorzugsweise aus textilem Material hergestellt ist, aufgezogen. Der Packerschlauch 35 ist mit mindestens je einer Bride 37 auf der Peripherie 33 der Scheiben 23 druckfest gehalten.
In einer vorteilhaften Ausgestaltung wird anstelle eines vorkonfektionierten Packerschlauchs 35 ein aus dem gleichen Material bestehendes vorzugsweise rechteckförmig zugeschnittenes Tuch verwendet, an welchem an zwei gegenüberliegenden Kanten Verbindungsmittel angebracht sind, durch welche das rechteckförmige Tuch zu einem Schlauch verformt werden kann. Dies ermöglicht es, den Packerschlauch an jeder beliebigen Stelle um das bereits mindestens teilweise in das Bohrloch eingeführte Rohrbündel zu legen. Die Scheiben 23 können wie bereits erläutert, ebenfalls an beliebiger Stelle in das Rohrbündel eingelegt werden. Entsprechen die Durchmesser der Bohrungen bzw. Löcher 25 an den Scheiben nicht den verwendeten Sondenrohren, so können entsprechend dimensionierte Adapterhülsen (nicht dargestellt) in die Bohrungen 25 eingelegt bzw. über die Sondenrohre geschoben werden.
In einer bevorzugten Ausgestaltung der Erfindung sind an den Scheiben 23 sehnenförmige Abflachungen 39 ausgebildet, auf denen die Spannelemente 41 der Briden 37 zu liegen kommen. Die Spannelemente 41 kommen dadurch nicht oder nur unwesentlich ausserhalb des Hüllkreises der Bridenbänder 37 zu liegen.
Der Packerschlauch 35 umschliesst zwischen den beiden Scheiben 23 einen im wesentlichen zylindrischen Raum, der von den Sondenrohren 21 durchdrungen wird. Weiter durchdringt die Füllleitung 31 den Raum derart, dass durch den Packer 1 hindurch eine Füllung des Bohrlochs 3 unterhalb des Packers 1 möglich ist. Eine zweite Verpressleitung 29 kann ebenfalls einen obenliegenden Packer 1 durchdringen, falls ein weiterer Packer 1 unterhalb angeordnet ist, um letzteren zu expandieren.

Mit der Verpressleitung 29 wird Zementbrühe in den Raum zwischen den beiden Scheiben 23 und dem Packerschlauch 35 eingepresst, um den Zutritt von Wasser aus dem Erdreich in den Bohrlochbereich zu verschliessen und dauernd zu versiegeln. Zu diesem Zweck ist der Packerschlauch 35 vorzugsweise aus einem porösen Filtergewebe hergestellt, welches den Durchtritt von Pressmaterial in den Bohrloch-Wandbereich ausserhalb des Packerschlauchs 35 ermöglicht. Es wird folglich nicht nur der Raum innerhalb des Packerschlauchs 35 zwischen den Scheiben 23 mit Zementbrühe gefüllt, sondern auch der zylindermantelförmige Raum zwischen der Bohrlochwand und dem Packerschlauch 35

Um bei einem beispielsweise 250 m langen Erdwärmesondenbündel an zuvor abgemessener Stelle, z.B. 125 m vom unteren Ende entfernt, einen Packer 1 aufsetzen zu können, können in den Scheiben 23 die Löcher 25 und 27 mit der Peripherie 33 verbindende Schlitze 43 angebracht sein. Diese ermöglichen es, die aus einem sehr elastischen Material hergestellte Scheibe 23 derart temporär zu spreizen, damit die Sondenrohre 21 und die Verpress- und Füllleitungen radial in die Scheibe 23 eingeführt werden können. Dadurch entfällt ein mühsames, beispielsweise über 125 m verlaufendes Einschieben der Scheiben 23 vom oberen Ende des Rohrbündels her. Zudem können die Löcher 25,27 exakt auf den Durchmesser der Sondenrohre 21 dimensioniert werden bzw. die Löcher 25,27 können einen geringfügig kleineren Durchmesser aufweisen als die darin zu führenden Rohre 21,29,31. Dadurch kann nach Festziehen der Briden 37 nach dem Aufsetzen des Packerschlauchs 35 eine optimale Abdichtung zwischen den Scheiben 23 und den darin geführten Leitungen erreicht werden.

Nur zum besseren Verständnis einer Erdwärmesonde 19 sind an deren unteren Ende noch das Sondengewicht 45 sowie der sog. Sondenfuss 47 dargestellt. Das Sondengewicht 45 besteht aus einem schweren metallenen Körper mit einer Führungsspitze, welches an der Unterseite des Sondenfusses 47 angebracht ist, der im Innern eine v- bzw. u-förmige Bohrung umfasst, welche die beiden Sondenrohre 21 zu einem haarnadelförmigen Gebilde verbindet.

## Patentansprüche

1. Packer (1) zum ständigen Dichten und Verschliessen von unterschiedlichen Grundwasserstockwerken sowie artesischen Zuläufen (9) oder gasführender Schichten in einem Bohrloch (3), umfassend zwei beabstandet angeordnete Scheiben (23) und ein an den Scheiben (23) befestigter Packerschlauch (35) und eine in den von den Scheiben (23) und dem Packerschlauch (35) umschlossenen Raum mündende Verpress- oder Beschickungsleitung (29) und, dass der Raum durch eine Anzahl von Sondenrohren durchdrungen wird, wobei der Packerschlauch (35) aus einem porösen textilen Material besteht, **dadurch gekennzeichnet, dass** die Scheiben (23) eine der Anzahl der Sondenrohre (21) eines Bündels einer Erdwärmesonde (19) entsprechende Anzahl von Bohrungen (25) umfassen, welche die Sondenrohre (21) einzeln dicht umschliessen.

2. Packer nach Anspruch 1, **dadurch gekennzeichnet, dass** die Bohrungen (25) in den Scheiben (23) durch Schlitze (43) mit der Peripherie (33) der Scheiben (23) verbunden sind, welche das Einsetzen der Scheiben (23) in ein Bündel von Sondenrohren (21) durch radiales Einschieben der Sondenrohre (21) in die Bohrungen (25) ermöglichen.

3. Packer nach einem der Ansprüche 1 oder 2, **dadurch gekennzeichnet, dass** der Packerschlauch (35) aus einem Filtergewebe besteht.

4. Packer nach einem der Ansprüche 2 oder 3, **dadurch gekennzeichnet, dass** der Packerschlauch (35) mit Briden (37) auf der Peripherie (33) der Scheiben (23) befestigt ist.

5. Packer nach Anspruch 4, **dadurch gekennzeichnet, dass** die Peripherie (33) der Scheiben (23) von der Kreisform abweichende Bereiche (39) aufweist, derart, dass die auf den Scheiben (23) aufgesetzten Spannelemente (41) der Briden (37) ganz oder teilweise innerhalb deren Kreisform zu liegen kommen.

6. Packer nach einem der Ansprüche 2 bis 5, **dadurch gekennzeichnet, dass** die axiale Ausdehnung des Packerschlauches (35) sich über Teillängen oder bis über die gesamte Bohrlochtiefe erstreckt.

7. Packer nach einem der Ansprüche 1 bis 6, **dadurch gekennzeichnet, dass** der Packerschlauch (35) aus einem rechteckig konfektionierten textilen Materialabschnitt besteht und durch einen Klettverschluss oder einen Reissverschluss um die Sondenrohre (21) der Erdwärmesonde (19) legbar und zu einem schlauchförmigen Körper verschliessbar ist.

8. Packer nach einem der Ansprüche 1 bis 7, **dadurch gekennzeichnet, dass** an den Scheiben (23) eine mindestens der maximalen Anzahl von Sondenrohren (21) entsprechende Anzahl von Bohrungen (25) angebracht ist, deren Durchmesser dem Durchmesser des dicksten Sondenrohres (21) entspricht.

9. Packer nach Anspruch 8, **dadurch gekennzeichnet, dass** zum dichten Aufnehmen dünner Sondenrohre (21) in die Bohrungen (25) entsprechende die Durchmesserunterschiede überbrückende Adapterhülsen auf die Sondenrohre (21) aufsteckbar sind.

## Claims

1. A packer (1) for continuous sealing and closing of different ground water levels and artesian inflow channels (9) or gas-carrying layers in a borehole (3), comprising two spaced discs (23) and a packing hose (35) which is attached to the discs (23) and an injecting or feeding line (29) discharging into the space enclosed by the discs (23) and the packing hose (35) and the space being penetrated by a number of probe tubes, wherein the packing hose (35) consists of a porous textile material, **characterized in that** the discs (23) comprise a number of drillings (25) corresponding to the number of probe tubes (21) of a bundle of a geothermal probe (19), each drilling tightly enclosing a probe tube (21).

2. The packer according to Claim 1, **characterized in that** the drillings (25) in the discs (23) are connected by means of slots (43) with the periphery (33) of the discs (23), which make it possible to insert the discs (23) into a bundle of probe tubes (21) by radially introducing the probe tubes (21) into the drillings (25).

3. The packer according to any one of Claims 1 or 2, **characterized in that** the packing hose (35) consists of a woven filter material.

4. The packer according to any one of Claims 2 or 3, **characterized in that** the packing hose (35) is fastened with clamps (37) to the periphery (33) of the discs (23).

5. The packer according to Claim 4, **characterized in that** the periphery (33) of the discs (23) comprises areas (39) deviating from the circular shape such that the tensioning elements (41) of the clamps (37) mounted on the discs (23) come to rest wholly or partially inside the circular form thereof.

6. The packer according to any one of Claims 2 to 5, **characterized in that** the axial extension of the packing hose (35) extends over partial lengths or up to the entire depth of the borehole.

7. The packer according to any one of Claims 1 to 6, **characterized in that** the packing hose (35) consists of a rectangular piece of textile material and can be positioned around the probe tubes (21) of the geothermal probe (19) and can be sealed to form a body in the form of a hose by means of a hook and loop fastener or a zip fastener.

8. The packer according to any one of Claims 1 to 7, **characterized in that** a number of drillings (25) corresponding to at least the maximum number of probe tubes (21) is mounted on the discs (23), the diameter of said drillings corresponding to the diameter of the thickest probe tube (21).

9. The packer according to Claim 8, **characterized in that** in order to accommodate thin probe tubes (21) in the drillings (25) tightly, suitable adapter sleeves which bridge the differences in diameters can be slid onto the probe tubes (21).

## Revendications

1. Packer (1) destiné à l'étanchéification et à la fermeture constantes de divers étages d'eau souterraine ainsi que d'affluences artésiennes (9) ou de couches véhiculant des gaz dans un trou de forage (3), comprenant deux disques (23) espacés l'un de l'autre et un tuyau de packer (35) fixé sur les disques (23) et une conduite de compression ou de chargement (29) débouchant dans l'espace entouré par les disques (23) et le tuyau de packer (35), et l'espace est percé par un certain nombre de tubes de sonde, le tuyau de packer (35) étant composé d'un matériau textile poreux, **caractérisé en ce que** les disques (23) comprennent un nombre d'alésages (25), correspondant au nombre des tubes de sonde (21) d'un faisceau d'une sonde géothermique (19), qui entourent individuellement de façon étanche les tubes de sonde (21).

2. Packer selon la revendication 1, **caractérisé en ce que** les alésages (25) dans les disques (23) sont raccordés, à la périphérie (33) des disques (23), par des fentes (43) qui permettent l'introduction des disques (23) dans un faisceau de tubes de sonde (21) par l'introduction radiale des tubes de sonde (21) dans les alésages (25).

3. Packer selon une des revendications 1 ou 2, **caractérisé en ce que** le tuyau de packer (35) est composé d'un tissu filtrant.

4. Packer selon une des revendications 2 ou 3, **caractérisé en ce que** le tuyau de packer (35) est fixé par des brides (37) sur la périphérie (33) des disques (23).

5. Packer selon la revendication 4, **caractérisé en ce que** la périphérie (33) des disques (23) présente des zones (39) qui s'écartent de la forme circulaire de telle sorte que les éléments de serrage (41) des brides (37) placés sur les disques (23) viennent se placer totalement ou partiellement à l'intérieur de leur forme circulaire.

6. Packer selon une des revendications 2 à 5, **caractérisé en ce que** l'étendue axiale du tuyau de packer (35) s'étend sur des longueurs partielles ou en dépassant la profondeur totale du trou de forage.

7. Packer selon une des revendications 1 à 6, **caractérisé en ce que** le tuyau de packer (35) est composé d'un tronçon de matériau textile confectionné de façon rectangulaire et, par une fermeture autoagrippante ou une fermeture à glissière, peut être placé autour des tubes de sonde (21) de la sonde géothermique (19) et être fermé pour donner un corps en forme de tuyau.

8. Packer selon une des revendications 1 à 7, **caractérisé en ce que**, sur les disques (23), un certain nombre d'alésages (25) correspondant au moins au nombre maximal de tubes de sonde (21) sont mis en place, dont le diamètre correspond au diamètre du tube de sonde (21) le plus épais.

9. Packer selon la revendication 8, **caractérisé en ce que**, pour la réception étanche de tubes de sonde (21) minces dans les alésages (25), des manchons d'adaptateur correspondants couvrant les différences de diamètre peuvent être enfichés sur les tubes de sonde (21).
